# EUROPEAN PATENT APPLICATION

(11) **EP 4 792 956 A1**
(43) Date of publication of application: **19.08.2026**
(21) Application number: 26156457.9
(22) Date of filing: 04.02.2026
(51) Int. Cl.: B22F 1/14, B22F 1/142, B22F 1/145, B22F 10/34, B33Y 40/10, B03C 7/00, B07B 7/01

(54) **METAL POWDER CONTAMINANT REMOVAL**

(30) Priority: 05.02.2025 US 202519046283
(71) Applicant: RTX Corporation, Farmington, CT 06032 (US)
(72) Inventor: EMERSON, Sean C., Broad Brook, 06016 (US); BURLATSKY, Sergei F., West Hartford, 06117 (US); CARDATOS, Haralambos, Colchester, 06415 (US); DARDAS, Zissis A., Worcester, 01602 (US); DASKIEWICH, Scott B., Oriskany, 13424 (US); SHE, Ying, Rocky Hill, 06067 (US)
(74) Representative: Dehns

(57) **Abstract**

A method for separating contaminants from metal alloy powder, includes subjecting a mixture of the metal alloy powder and the contaminants sequentially to at least two methods selected from the group consisting of mechanical separation; electrostatic separation; washing with solvent, acid or base; subjecting to heat; fluidized bed treatment and aerodynamic separation. A number of specific combinations of steps are disclosed.

## Description

### FIELD

The present disclosure relates to a method for removing contaminants from metal alloy powders.

### BACKGROUND

Metal alloy powders are used in the production of aircraft components such as components of gas turbine engines, geared turbofan engines and the like. These powders can become contaminated with small concentrations of impurities during production of the powders. These impurities can come from numerous sources including the machinery used to prepare the powders, from the source material for the powders, and other locations. The presence of impurities in these powders can result in non-metallic inclusions or defects that can lead to reduced component life or failure.

There are a number of possible approaches or processes that can be used to try to remove contaminants from the alloy powders. Unfortunately, these processes are generally not successful in sufficient removal of contaminants.

### SUMMARY OF THE DISCLOSURE

The present disclosure is directed to enhanced separation of contaminants from metal alloy powders through the use of sequential different method steps to effectively remove the contaminants.

In one aspect, a method for separating contaminants from metal alloy powder comprises subjecting a mixture of the metal alloy powder and the contaminants sequentially to at least two methods selected from the group consisting of mechanical separation; electrostatic separation; washing with solvent, acid or base; subjecting to heat; fluidized bed treatment and aerodynamic separation.

In a non-limiting configuration, the metal alloy powder comprises nickel alloy powder.

In another non-limiting configuration, the contaminants are selected from the group consisting of organic contaminants, inorganic contaminants and combinations thereof.

In still another non-limiting configuration, the contaminants comprise organic contaminants.

In a further non-limiting configuration, the organic contaminants include at least one of nitrile rubber, thermoplastic materials and mixtures thereof.

In a still further non-limiting configuration, the thermoplastic materials include PVC-based tubing materials.

In another non-limiting configuration, the mixture comprises particles of contaminants having metal alloy powder on a surface of the particles.

In still another non-limiting configuration, the at least two methods comprise a mechanical separation followed by at least one of electrostatic separation; washing with solvent, acid or base; subjecting to heat; fluidized bed treatment and aerodynamic separation.

In a further non-limiting configuration, the mechanical separation is followed by the electrostatic separation.

In a still further non-limiting configuration, the at least two methods comprise a heat treatment followed by a fluidized bed treatment.

In another non-limiting configuration, the heat treatment comprises treatment in a rotary furnace under an inert atmosphere to break down organic contaminants into unconverted residue, and wherein the fluidized bed treatment separates the unconverted residue from the metal alloy powder.

In still another non-limiting configuration, the method further comprises a mechanical separation step before the heat treatment.

In a further non-limiting configuration, the method further comprises an electrostatic separation step after the fluidized bed treatment.

In a still further non-limiting configuration, the mechanical separation comprises passing the mixture through a sieve or screen.

In another non-limiting configuration, the electrostatic separation comprises applying electrical field to the mixture to separate particles based upon charge difference.

In still another non-limiting configuration, the washing with solvent, acid or base comprises dissolving contaminants in a solvent for the contaminants.

In a further non-limiting configuration, the heat treatment comprises exposing the mixture to a temperature of between 500 °F (260 °C) and 1000 °F (538 °C) in a rotary furnace for a period of time of at least 20 minutes, whereby organic contaminants are reduced to residue.

In yet another non-limiting configuration, the heat treatment comprises a first heat treatment conducted at a temperature of between 800F (427 °C) and 1000F (538 °C) for a period of time of at least 20 minutes in an Argon atmosphere, followed by a second heat treatment at a temperature of at least 400F (204 °C) for a period of time of at least 20 minutes in an air atmosphere.

In a still further non-limiting configuration, the fluidized bed treatment separates particles of the mixture based on particle size.

In another non-limiting configuration, the aerodynamic separation separates particles based upon mass or density.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a nitrile rubber contaminant encrusted with metal alloy powder;
FIG. 2 illustrates a cryomilled thermoplastic PVC contaminant encrusted with metal alloy powder;
FIG. 3 is a thermographic analysis of nitrile rubber when processed with heat under an inert (argon) atmosphere and also in air;
FIG. 4 illustrates variation in particle density with contaminant size due to coating of metal alloy powder on contaminant particles of different sizes;
FIG. 5 illustrates one non-limiting embodiment of a separation method according to the disclosure;
FIG. 6 illustrates another non-limiting embodiment of a separation method according to the disclosure; and
FIG. 7 illustrates a further non-limiting embodiment of a separation method according to the disclosure.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

The disclosure relates to a method for removing contaminant materials from metal powder, especially metal alloy powder such as nickel alloy powder, one example of which is IN100. The disclosed method is an approach to reduce or eliminate the presence of contaminants in metal alloy powders. The contaminants can come from numerous sources, one non-limiting example of which is nitrile rubber such as BUNA-N that can come from O-rings in various plant equipment. Another non-limiting example of possible contaminant is thermoplastic material such as PVC based tubing from various stations or equipment used to produce the metal alloy powder. These two contaminants are organic contaminants. It is possible to have inorganic contaminants as well, for example ceramic material can be present in the metal alloy powder. These contaminants will have very different properties and therefore can be difficult or impossible to remove in a single processing step. This difficulty is enhanced by the way that the contaminants and metal alloy powders manifest.

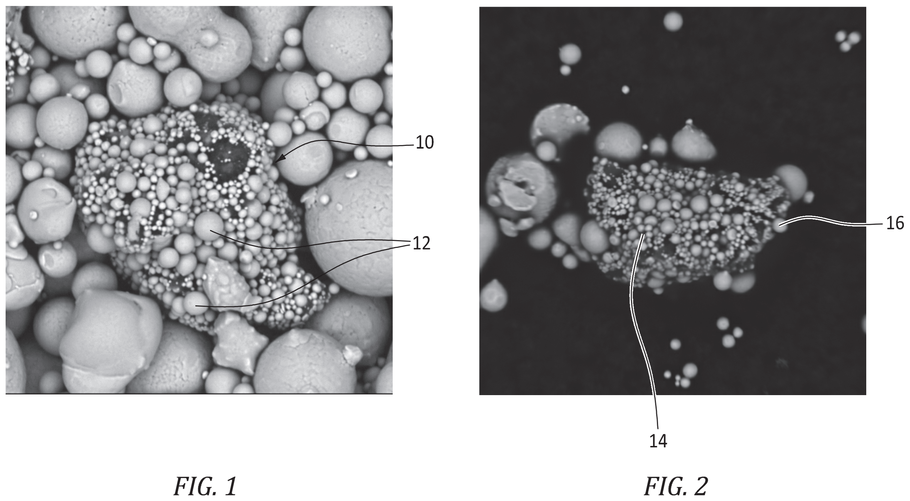

FIG. 1 shows an image of a cryomilled BUNA-N nitrile rubber particle that was mixed with metal alloy powder, with the particle 10 in the center of the image encrusted with smaller particles 12 of metal alloy powder, specifically nickel alloy powder (IN100). In this form, the nitrile rubber particle forms the center of the agglomerate, and the metal alloy powder decorates or encrusts the outer surface of the nitrile rubber particle. The metal alloy powder can be reacted with the nitrile rubber, or adhered to or agglomerated with the nitrile rubber. Regardless of the mechanism by which they are formed, combined contaminant/metal alloy powder structures will be referred to as agglomerates. Such an agglomerate can be difficult to separate from the metal alloy powder using any known step.

FIG. 2 shows a similar agglomerate, in this case a particle of ground or cryomilled Tygon tubing, which is a thermoplastic PVC-based material. This material can also frequently be encountered in metal alloy powders for example being sourced from a plant wherein the tubing is used. In this illustration as well, a particle 14 of the PVC-based material is centrally located and is encrusted with smaller particles 16 of metal alloy powder.

A number of steps are known which can be used to try to separate contaminants from metal alloy powders when in agglomerates as shown in FIGS. 1 and 2. In this regard, it should be noted that it is not expected by persons of skill in the art that such agglomerate particles would even result from a mixing of metal alloy powders with the contaminants. Nevertheless, the formation of such hybrid contaminant material agglomerates is a real challenge to be addressed. However, the known steps to try to separate these materials are not individually well-suited for sufficient removal of the contaminant such that non-metallic inclusions can still result from the article fabricated from the metal alloy powder that still contains such contaminants.

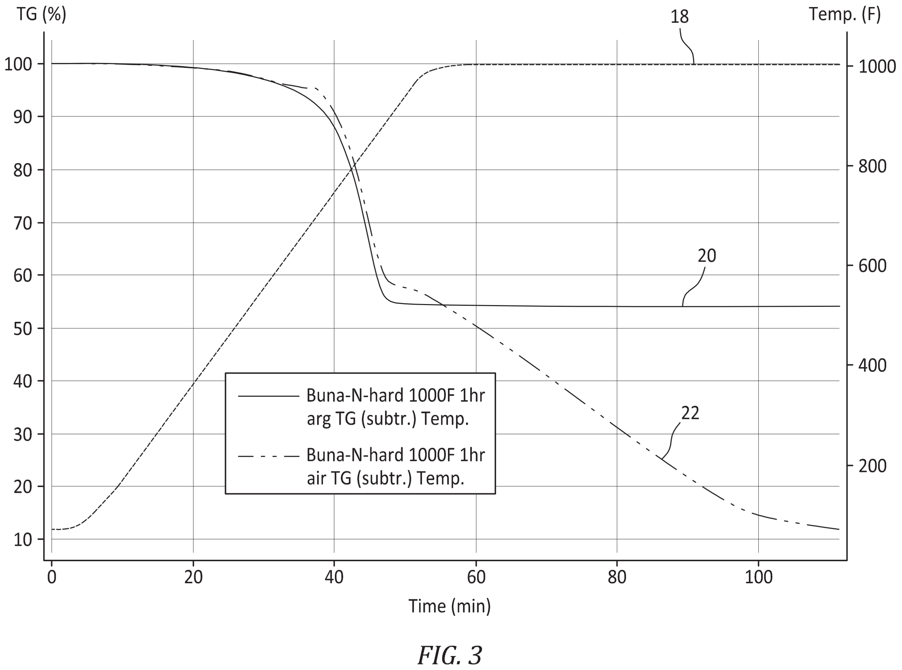

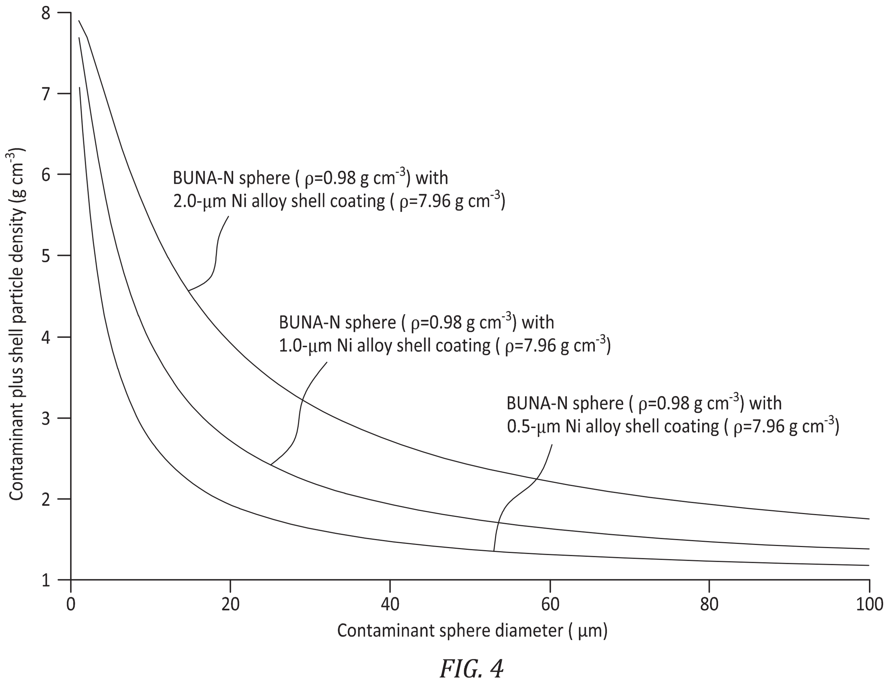

FIGS. 3 and 4 further illustrate why it is difficult to remove these contaminants using single step known processes.

FIG. 3 shows a thermogravimetric analysis (TGA) of nitrile rubber (BUNA-N) material when exposed to either argon or air at 1,000 degrees F (538 degrees C)_for 1 hour. Such a treatment could take place in a rotary kiln or calciner, for example. In FIG. 3, at temperature that is raised to 1,000 degrees F (538 degrees C) and reaches this temperature at about the 55 minute mark, and then held for an hour (see temperature line 18), from the argon line 20 it can be seen that more than 50% of the nitrile rubber remains after the heat treatment. Further, even in the presence of air, see line 22, still more than 10% of the nitrile rubber remains, thus indicating that an inorganic residue is left after combustion in the air atmosphere. Of course, carrying out this step in air is problematic due to oxidation concerns for the metal alloy powders in any event. Thus, it is clear that with such contaminant, a heat treatment process by itself is not likely to be sufficient to result in substantially pure metal alloy powder.

FIG. 4 illustrates a further challenge with known steps, in this case those that are based upon differences in density. The agglomerate particles such as those illustrated in FIGS. 1 and 2 will have different sizes, and the larger the contaminant particle, the lower the density of that agglomerate particle, as the bulk of the agglomerate is composed of the contaminant. However, as the contaminant particles get smaller in size, the density of agglomerates gets closer to the density of the metal, making it much harder for smaller agglomerate particles to be separated from the metal alloy powder with processes that rely upon density differences. Thus, the apparent density of the agglomerate particles will vary as a function of particle size. FIG. 4 shows the calculated density of a spherical nitrile rubber (BUNA-N) contaminant that is covered by a shell of alloy metal with the density of a nickel alloy. The nitrile rubber in question has a density of approximately 0.98 g/cm³ and the Ni alloy shell material has a density of about 7.96 g/cm³. In FIG. 4, it can be seen that as the contaminant sphere diameter decreases, in each case (different thicknesses of metal alloy shell), the density approaches that of the nickel alloy material. Thus, the conclusion can be drawn that separation processes based upon density alone will not be successful in removing smaller agglomerate particles, which will remain in the metal alloy powder to cause problems with inclusions and the like.

As noted above, a number of different processes can be utilized to attempt to remove contaminants from metal alloy powders. Table 1 below sets forth a non-limiting list of such processes.

**Table 1**

| **Unit Operation** | **Separation Approach** | **Advantages/Disadvantages** |
|---|---|---|
| Sieves/screens | Particle size separation | If contaminants agglomerate with the metal powder, sieving may become difficult or have no effect |
| Electrostatic | Charged particle separation | Potential to remove poor electrically conductive materials from metal powder; may not help separate other metal contaminants or small particle sizes |
| Solvent/acid/base wash | Dissolve contaminants | Depends on solubility of contaminants in chosen solvent or aqueous solution; may potentially introduce contamination from the wash fluid |
| High temperature (e.g., rotary furnace or kiln) | Thermal decomposition | High temperature in an inert atmosphere can potentially decompose and breakdown organic compounds; unconverted residue or inorganic components would be less affected and potentially remain |
| Fluidized bed | Size separation | Useful for separating smaller particles from larger particles in a distribution; may be too inefficient to separate contaminants with particle size distributions similar to the metal powder |
| Aerodynamic separation (cross-flow or Coanda) or gravity separation (centrifugal or cyclone separators) | Density or mass separation | Separate contaminants based on density differences between the contaminants and the metal powder; less efficient if the contaminants are similar in density to the metal powder or have strong adhesion to the metal powder |

Table 1 sets forth the issues encountered when using the listed steps in trying to separate contaminants from agglomerate particles as described above.

To restate, mechanical separation such as sieve or screen treatment of the material may have little or no effect if agglomerates form with contaminant particles coated with metal alloy powders, or in the reverse, as it is possible for such hybrid particles to form in this manner as well, with a metal alloy particle coated with contaminant. Thus, the size of the particle is not necessarily indicative of whether the particle is metal alloy powder, contaminant, or a hybrid of both.

With electrostatic separation, since the mechanism is based upon charged particles, the agglomerates having metal alloy shell will also be charged, and thus will behave in the same manner as the metal alloy powder particles.

For treatment with solvent, acid or base washes, effectiveness depends upon the solubility of the contaminants in the chosen solvent or aqueous solution. Further, the wash itself may introduce a further contaminant.

For the high temperature treatment, unconverted residue and inorganic components of the contaminants will potentially remain.

For fluidized bed treatment, since this mechanism is based upon particle size, and the size of hybrid or agglomerate particles is not predictable, contaminants with particle size distributions similar to the metal powder will remain.

For aerodynamic separation, which can be accomplished with cross-flow mechanisms, or centrifugal or cyclone separation, the mechanism is density or mass separation. However, as noted above, mechanisms based upon differences in density are not expected to be efficient with small particles because as the particle of contaminant decreases in size, the density of the hybrid particle approaches the density of the metal alloy powder.

In the disclosed non-limiting embodiments set forth herein, efficiency of removing contaminants from metal alloy powders is enhanced by using specific effective combinations of different separation methods. Thus, in a broad sense, the disclosure relates to the use of any two or more sequential processes as listed in Table 1.

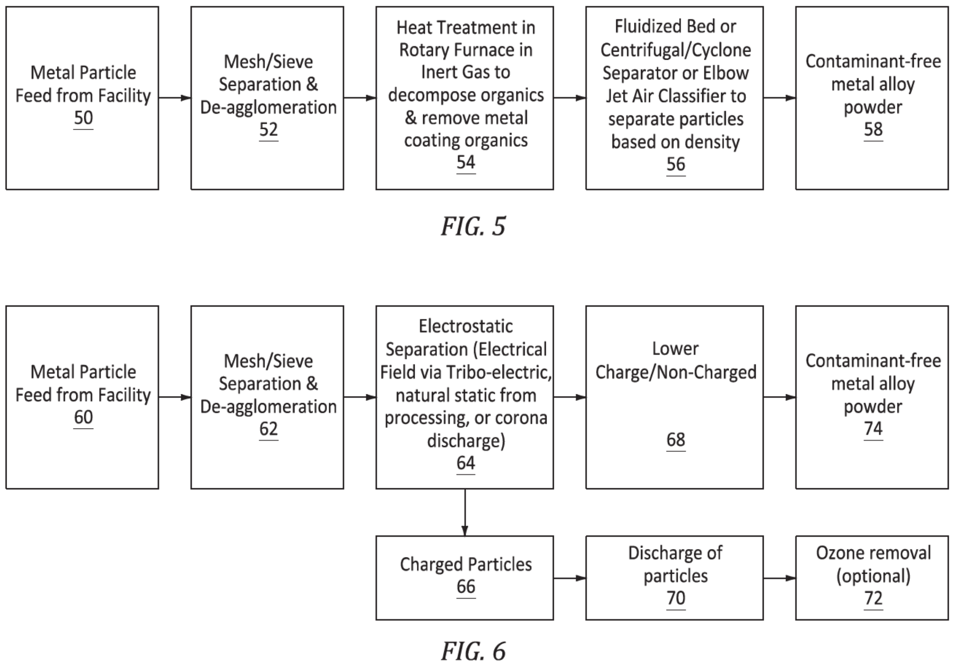

For example, and turning to FIG. 5, steps of a method according to one non-limiting embodiment are schematically illustrated. This method begins with metal particles in a feed from a facility, shown at step 50. These particles will comprise the desired metal alloy powder, but will also have contaminants such as those discussed above, namely organic contaminants such as nitrile rubber, PVC materials and the like, inorganic contaminants such as ceramic particles, and the like. In step 52, the feed is subjected to a mesh or sieve separation and deagglomeration. This step can remove particles that are obviously too large to be metal alloy powder, and to break up any agglomerates of just metal alloy powder to prevent the removal of large agglomerates of potentially pure metal alloy powder. Once completed, the separated particles having acceptable particle size are then subjected to another, different processing step. In this case, the next step is a heat treatment (step 54), which can be carried out in a rotary furnace under an inert gas such as argon in order to decompose organic materials and remove metal coatings from such organics. This heat treatment can be carried out at a temperature of between about 500 °F (260 °C) and about 1000 °F (538 °C), and for a period of time of at least about 20 minutes. The resulting heat-treated material can then be treated in another step, in this case to differentiate particles on the basis of density (step 56). The step can be carried out using a fluidized bed, a centrifugal or cyclone separator, or an elbow jet air classifier, as several non-limiting examples. The result of step 54 is a material that can be efficiently differentiated on the basis of density, since the hybrid or agglomerate particles are broken up by the decomposition of the organic contaminants. Thus, the result of step 56 is a contaminant-free metal alloy powder 58, as desired.

It should be appreciated that in the embodiment of FIG. 5, if heat treatment 54 were not carried out before step 56, the separation based upon density or mass would likely be unable to efficiently remove the encrusted contaminants, particularly at small sizes. Thus, the sequence of steps in this embodiment is well-suited to removal of contaminants.

As will be apparent from this disclosure, an aspect of the methods disclosed herein is the arrangement of two or more separation approaches to deal with complicated contaminants in metal powders. An integral aspect of this disclosure is the arrangement of two or more separation approaches to deal with complicated contaminants in metal powders, such as those shown in FIGS. 1 and 2. As another example, electrostatic separation techniques have the potential to separate conductive metal powder from poorly conductive organic materials. However, if the organic particles are encrusted with metal powder adhered to the outside of the contaminants, then electrostatic charging will be unlikely to affect the contaminants. By doing a heat treatment in argon first, to decompose the organic material, the adhesion of the metal to the contaminants can be reduced or eliminated, making a second, electrostatic separation approach effective.

Further, in another non-limiting configuration, the electrostatic separation is carried out by subjecting the mixture of alloy powder and contaminant to an electric charge whereby all particles of the mixture are charged. The mixture can then be discharged, in which case metal alloy material discharges almost immediately, while the contaminant holds a charge for a longer period of time. This then allows separation of the discharged metal alloy powder from the still charged contaminant. This is further useful in the present process because particles of contaminant have a metal alloy powder shell can still be separated as desired due to the slow discharge of the charge in the contaminant materials.

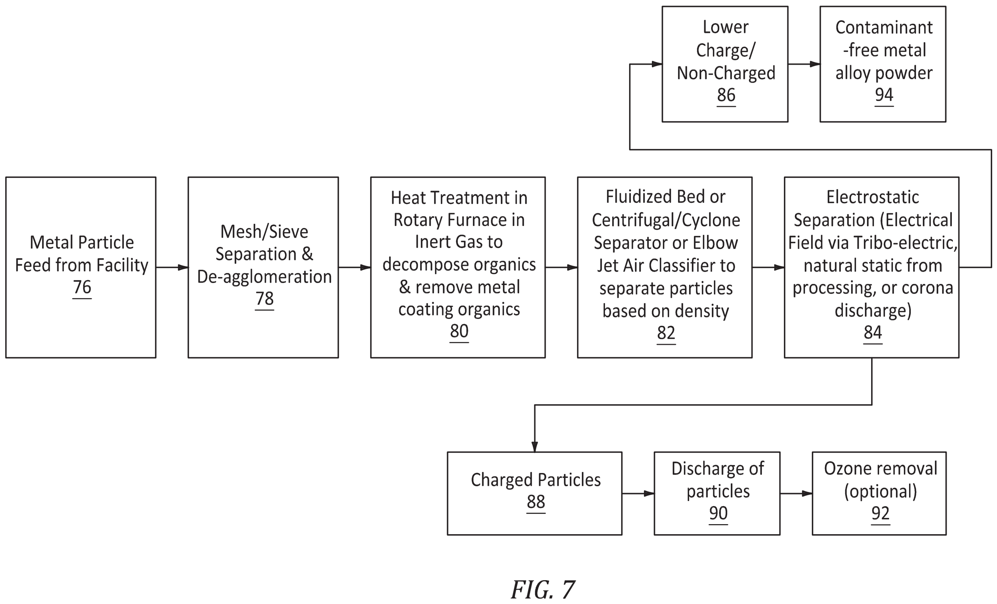

There are additional combinations of two or more of the separation techniques listed in Table 1 that could be used to deal with the nature of complex metal powder contaminants. For example, if the contaminants contain ceramic particles, such as aluminum-magnesium spinels from refractory melt lining material, a heat treatment in inert gas is unlikely to affect those materials, even though organic materials will be decomposed. However, the use of a suitable solvent, acid, or caustic chemical wash after a heat treatment, density-based separation, or electrostatic separation step would allow the ceramic particles to be dissolved away from the metal to remove the ceramic contaminants. Similarly, a deagglomeration step, such as using an advanced particle size separation or sieving technique, followed by an electrostatic or density-based separation could also deal with ceramic contaminant particles. One non-limiting example of a combination of steps, or process configuration, was discussed above with respect to FIG. 5. FIGS. 6 and 7 provide additional non-limiting examples of embodiments of the disclosed method.

FIG. 6 shows a method again starting with a metal particle feed from a facility, wherein the feed contains contaminants. This is shown at step 60. As with the method of FIG. 5, the next step in this method is a mesh/sieve treatment to separate and deagglomerate the feed (step 62). In this method, step 64 is an electrostatic separation step, wherein an electric field is applied, for example from a tribo-electric, natural static from processing, or a corona discharge. Through the application of an electrical field to the mixture, separate particles can be separated based upon charge difference. For example, all particles in the mixture are charged in this step, and then the particles are discharged. The discharge results in the metal alloy powder almost immediately losing its charge, leading to lower and non-charged particles in step 68, which are then passed long as the contaminant-free metal alloy powder in step 74. The discharge is not as fast with the contaminant particles, and therefore step 64 also generates a stream of charged particles 66 which represent the contaminant that still holds a charge, as well as the agglomerate particles wherein the contaminant still holds the charge. These contaminant particles can then be further discharged in step 70, and/or subjected to an ozone removal step 72, before further disposal as desired. To the extent that the mesh/sieve step 62 is effective in breaking up the agglomerate particles, the charged particles at 66 should be mostly contaminant, with some metal alloy powder that may still be adhered to the contaminant, while the lower charge particles at step 68 will be contaminant-free metal alloy powder as desired. Thus, following step 66, contaminant can be disposed of as desired. In the meantime, the charged particles representing metal alloy powder can then be discharged in step 74. Any of the particles, including the metal alloy powder of step 74, can be subject to an optional ozone removal step 72, which is optional but can be desirable following the electrostatic treatment, and then result in the desired contaminant-free metal alloy powder 74.

FIG. 7 illustrates another non-limiting example of a process according to the disclosed method. In FIG. 7, again a feed or contaminated particles 76 is obtained from a facility. In this method, also, the method starts with a mesh/sieve treatment 78. This then feeds to a heat treatment step 80, which as noted above can advantageously be conducted under an inert atmosphere such as argon, which serves to decompose organics and remove metal coating on the now at least partially decomposed underlying contaminant particles. Then, in step 82, the heat-treated materials are fed to a density based separation step such as a fluidized bed, centrifuge, cyclone separator, elbow jet air classifier or the like. The resulting classified materials that match the desired metal alloy powder density can then be fed to step 84, an electrostatic separation step similar to that discussed above with respect to FIG. 6. In step 84, all particles are first charged and then discharged, and the metal alloy powder is fastest to discharge. This, the results of step 84 will be low or non-charged particles 86 which represent the desired alloy powder, which can then be fed to step 94 as the desired contaminant-free metal alloy powder. In step 88, the particles that emerge from step 84 with a charge represent the contaminant materials, because these materials do not discharge as quickly as the metal alloy powder. These are particles of contaminant and also agglomerate particles of contaminant and metal alloy powder. These contaminant particles can then be fed to a further discharge step 90, and/or an optional ozone removal step 92 as desired, before further disposal. The metal alloy powder of step 94 can also be fed to the optional ozone removal step if desired, and is then ready for use in the intended process for manufacture of alloy components.

As mentioned above, one of the possible combination of treatment steps to separate contaminant from the desired metal alloy powders is a heat treatment step, and this is disclosed as being a heat treatment at a temperature in the range of between 500 and 1,000 degrees F (260 and 538 degrees C), for at least 20 minutes. This heat treatment can be carried out in a rotary furnace as one non-limiting example of hardware.

In another non-limiting configuration, a heat treatment can be carried out in two steps. In such a process, the first step can be conducted at a temperature of between 800 and 1000F (427 and 538 °C) for a minimum of 20 minutes under an atmosphere of Argon. The second step can then be conducted at a temperature having a minimum of 400F (204 °C) for a period of time of a minimum of 20 minutes and in an air atmosphere.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for separating contaminants (10; 14) from metal alloy powder (12; 16), comprising subjecting a mixture of the metal alloy powder (12; 16) and the contaminants (10; 14) sequentially to at least two methods selected from the group consisting of mechanical separation; electrostatic separation; washing with solvent, acid or base; subjecting to heat; fluidized bed treatment and aerodynamic separation.

2. The method of claim 1, wherein the metal alloy powder (12; 16) comprises nickel alloy powder (12; 16).

3. The method of claim 1 or 2, wherein the contaminants (10; 14) are selected from the group consisting of organic contaminants, inorganic contaminants and combinations thereof.

4. The method of claim 3, wherein the contaminants (10; 14) comprise organic contaminants, optionally wherein the organic contaminants include at least one of nitrile rubber, thermoplastic materials, optionally including PVC-based tubing materials, and mixtures thereof.

5. The method of any preceding claim, wherein the mixture comprises particles (10; 14) of contaminants having metal alloy powder (12; 16) on a surface of the particles (10; 14).

6. The method of any preceding claim, wherein the at least two methods comprise a mechanical separation followed by at least one of:
electrostatic separation;
washing with solvent, acid or base;
subjecting to heat;
fluidized bed treatment; and
aerodynamic separation,
optionally wherein the mechanical separation is followed by the electrostatic separation.

7. The method of any preceding claim, wherein the at least two methods comprise a heat treatment followed by a fluidized bed treatment.

8. The method of claim 7, wherein the heat treatment comprises treatment in a rotary furnace under an inert atmosphere to break down organic contaminants into unconverted residue, and wherein the fluidized bed treatment separates the unconverted residue from the metal alloy powder.

9. The method of claim 7 or 8, further comprising a mechanical separation step before the heat treatment and optionally further comprising an electrostatic separation step after the fluidized bed treatment.

10. The method of any preceding claim, wherein the mechanical separation comprises passing the mixture through a sieve or screen.

11. The method of any preceding claim, wherein the electrostatic separation comprises applying electrical field to the mixture to separate particles based upon charge difference.

12. The method of any preceding claim, wherein the washing with solvent, acid or base comprises dissolving contaminants in a solvent for the contaminants.

13. The method of any preceding claim, wherein the heat treatment comprises exposing the mixture to a temperature of between 500 °F (260 °C) and 1000 °F (538 °C) in a rotary furnace for a period of time of at least 20 minutes whereby organic contaminants are reduced to residue.

14. The method of any preceding claim, wherein the heat treatment comprises a first heat treatment conducted at a temperature of between 800 °F (427 °C) and 1000 °F (538 °C) for a period of time of at least 20 minutes in an Argon atmosphere, followed by a second heat treatment at a temperature of at least 400 °F (204 °C) for a period of time of at least 20 minutes in an air atmosphere.

15. The method of any preceding claim, wherein the fluidized bed treatment separates particles of the mixture based on particle size; and/or wherein the aerodynamic separation separates particles based upon mass or density.
